# EUROPEAN PATENT SPECIFICATION

(11) **EP 3 130 479 B1**
(45) Date of publication and mention of the grant of the patent: **05.09.2018**
(21) Application number: 15798673.8
(22) Date of filing: 28.05.2015
(51) Int. Cl.: B60C 11/00, B60C 3/04, B60C 17/00, B60C 11/12, B60C 9/08

(54) **PNEUMATIC RADIAL TIRE FOR USE ON PASSENGER VEHICLE**
RADIALLUFTREIFEN ZUR VERWENDUNG AN EINEM PASSAGIERFAHRZEUG
BANDAGE PNEUMATIQUE RADIAL DESTINÉ À ÊTRE UTILISÉ SUR UN VÉHICULE DE TOURISME

(30) Priority: 30.05.2014 JP 2014113481
(43) Date of publication of application: 15.02.2017
(73) Proprietor: Bridgestone Corporation, Tokyo 104-8340 (JP)
(72) Inventor: HATANAKA, Shintaro, Tokyo 104-8340 (JP); KUWAYAMA, Isao, Tokyo 104-8340 (JP)
(74) Representative: Oxley, Robin John George
(86) International application number: PCT/JP2015/002710
(87) International publication number: WO 2015/182152

(56) References cited:
- WO-A1-2013/014950
- WO-A1-2013/065319
- JP-A- H07 164 821
- JP-A- H07 164 821
- JP-A- 2005 336 347
- JP-A- 2008 143 485
- JP-A- 2008 143 485

## Description

### TECHNICAL FIELD

The disclosure relates to a passenger-vehicle pneumatic radial tire.

### BACKGROUND

Since conventional vehicles built up to around 1960 were lightweight and the cruising speed required for vehicles was slower, the load on tires was smaller. Therefore, bias tires with a smaller tire section width were used. At present, however, as vehicles have become heavier and faster, tires have been made to have a radial structure and a larger width (e.g. JPH0740706A (PTL 1)).

However, an increase in tire section width compresses vehicle space and reduces ride comfort inside the vehicle. Further, due to the increase in air resistance, fuel efficiency is deteriorated.

In recent years, the demand for higher fuel efficiency is becoming more severe due to the growing interest in environmental issues. The high fuel efficiency is evaluated by rolling resistance (RR), and it is known that a lower rolling resistance results in higher fuel efficiency.

In order to reduce the tire rolling resistance coefficient (RRC) to improve high fuel efficiency, it is known that increasing the diameter and width of the tire is effective. However, increasing the diameter and width of the tire causes an increase in tire weight and air resistance, and therefore results in an increase in vehicle resistance, and further, the load capacity of the tire becomes excessive.

To address this problem, we have proposed a technique regarding a pneumatic radial tire for passenger vehicles in which the internal pressure and sectional width (SW) of the tire and the outer diameter (OD) of the tire satisfy a certain relation, in other words, a pneumatic radial tire for passenger vehicles with a narrow-width (narrow tire width) and a large-diameter (large tire outer diameter) (e.g. WO2012176476 (PTL 2)).

### CITATION LIST

### Patent Literature

PTL 1: JPH0740706A
PTL 2: WO2012176476

Attention is also drawn to the disclosures of JP H07 164821 which discloses a tire according to the preamble of claim 1, JP 2008 143485 and WP2013/014950.

### SUMMARY

### (Technical Problem)

Meanwhile, with such narrow-width, large-diameter radial tire, there was still room for consideration in wet performance which is an index regarding braking performance on a wet road surface. Therefore, we have been carrying out studies for improving wet performance by adjusting the dynamic storage modulus E' at 30 °C of the tread rubber of the radial tire, and have found that, by adjusting the dynamic storage modulus E' in a predetermined range, wet performance can be improved. However, even in such cases, a further improvement in wet performance and rolling resistance performance has been required.

It could therefore be helpful to provide a narrow-width, large-diameter radial tire which is a passenger-vehicle pneumatic radial tire with improved wet performance and rolling resistance performance.

### (Solution to Problem)

The passenger-vehicle pneumatic radial tire according to a first aspect of the invention is as claimed in claim 1.

According to the an aspect of the invention, it is possible to improve the wet performance and rolling resistance performance of a narrow-width, large-diameter radial tire.

In an aspect of the invention, the sectional width SW and the outer diameter OD of the tire are the sectional width and outer diameter prescribed by JIS D 4202-1994 when the tire is assembled to a rim, filled with an internal pressure of 250 kPa or more and no load is applied thereon.

The aforementioned "rim" refers to a standard rim in an applicable size (such as Measuring Rim in STANDARDS MANUAL of ETRTO, Design Rim in YEAR BOOK of TRA) recited in industrial standards effective in a region where the tire is manufactured and used, for example, JATMA YEAR BOOK published or will be published in the future by the Japan Automobile Tire Manufacturers Association, Inc. (JATMA) in Japan, in STANDARDS MANUAL of the European Tire and Rim Technological Organization (ETRTO) in Europe, and in YEAR BOOK of the Tire and Rim Association, Inc. (TRA) in the US (in other words, the aforementioned "rim" includes those of the sizes currently included and the sizes which may be included in the above industrial standards in the future. Examples of "sizes indicated in the future" are sizes described as "FUTURE DEVELOPMENTS" in ETRTO 2013). In cases of sizes not indicated in the above industrial standards, "rim" refers to a rim with width corresponding to the bead width of the tire.

In an aspect of the invention, the dynamic storage modulus E' (MPa) and loss tangent tanδ (ratio (E"/E') of dynamic loss elastic modulus (E") to dynamic storage modulus (E')) are related to vulcanized rubber, and are values obtained by applying an initial load of 160 g on a test piece of thickness: 2 mm; width: 5 mm; and length: 20 mm, and carrying out measurement under the conditions of initial strain: 1 %; and frequency: 50 Hz. The dynamic storage modulus E' is, unless otherwise specified, the value measured at a temperature of 30 °C (hereinafter, the dynamic storage modulus E' at 30 °C will also be referred to simply as "E'") and the loss tangent tanδ is, unless otherwise specified, the value measured at a temperature of 60 °C (hereinafter, the loss tangent tanδ at 60 °C will also be referred to simply as "tanδ").

In an aspect of the invention, the buttress portion refers to a tire portion which, in a tire widthwise cross sectional view, is between a virtual line extending in the tire radial direction and passing through the tread ground contact end, and a virtual line extending in the tire widthwise direction and passing through a tire surface position which is distanced by a half of a peripheral length measured from the tread ground contact end to another tire surface position which corresponds to the sectional width SW of the tire.

In an aspect of the invention, the tread ground contact end refers to the tread widthwise outermost position of the tread surface, and the tread surface refers to the outer circumferential surface of the whole tire, which comes into contact with the road surface when the tire assembled to the above rim and filled with an internal pressure of 250 kPa or more is rolled in the state of being applied with a load of 75 % of the maximum load capability.

In an aspect of the invention, the tread rubber and the buttress rubber refer to rubbers containing no members such as a belt, carcass or the like which are optionally included in the tread portion and buttress portion.

In an aspect of the invention, the buttress rubber has a desirable dynamic storage modulus E' at 30 °C and desirable loss tangent tanδ at 60 °C when, of the whole buttress rubber, the rubber, in a tire widthwise cross sectional view, between the tire radial inner end and the virtual line extending in the tire radial direction through the tire surface position moved from the tread ground contact end toward the tire widthwise outer side by 10 mm in peripheral length at least has a desirable E' and tanδ.

For the pneumatic radial tire for passenger vehicles of an aspect of the invention, it is preferable for a dynamic storage modulus E' at 30 °C of the tread rubber to be 7.9 MPa to 11.0 MPa and a dynamic storage modulus E' at 30 °C of the buttress rubber to be 3 MPa or less.

With this structure, it is possible to further improve wet performance and rolling resistance performance.

### (Advantageous Effect)

According to an aspect of the invention, it is possible to provide a narrow-width, large-diameter radial tire which is a pneumatic radial tire for passenger vehicles with improved wet performance and rolling resistance performance.

### BRIEF DESCRIPTION OF THE DRAWINGS

In the accompanying drawings:
FIG. 1 is a tire widthwise cross sectional view illustrating the pneumatic radial tire for passenger vehicles according to the first embodiment of the invention;
FIG. 2A is for explaining the wet performance of a wide-width radial tire, and FIG. 2B is for explaining the wet performance of a narrow-width radial tire;
FIG. 3 is a schematic developed view illustrating the first example of a tread pattern;
FIG. 4 is a schematic developed view illustrating the second example of a tread pattern;
FIG. 5 is a schematic developed view illustrating the third example of a tread pattern;
FIG. 6 is a schematic developed view illustrating the forth example of a tread pattern;
FIG. 7 is a tire widthwise schematic cross sectional view of a tire widthwise half portion of the pneumatic tire for passenger vehicles according to the second embodiment of the invention;
FIG. 8 is a schematic plan view illustrating the first example of a belt structure;
FIG. 9 is a schematic plan view illustrating the second example of a belt structure;
FIG. 10 is a schematic plan view illustrating the third example of a belt structure;
FIG. 11 is a tire widthwise schematic cross sectional view of a tire widthwise half portion of the pneumatic tire for passenger vehicles according to the third embodiment of the invention; and
FIG. 12 is a tire widthwise schematic partial cross sectional view of a tire widthwise half portion of the pneumatic tire for passenger vehicles according to the forth embodiment of the invention.

### DETAILED DESCRIPTION

Hereinafter, with reference to the drawings, the pneumatic radial tire 1 for passenger vehicles (or passenger-vehicle pneumatic radial tire) according to the first embodiment of the invention (hereinafter, also simply referred to as "tire") will be described in detail. The following descriptions and drawings are an example for describing the tire 1 of an embodiment of the invention, and the invention is not intended to be limited in any way by the descriptions and illustrated forms.

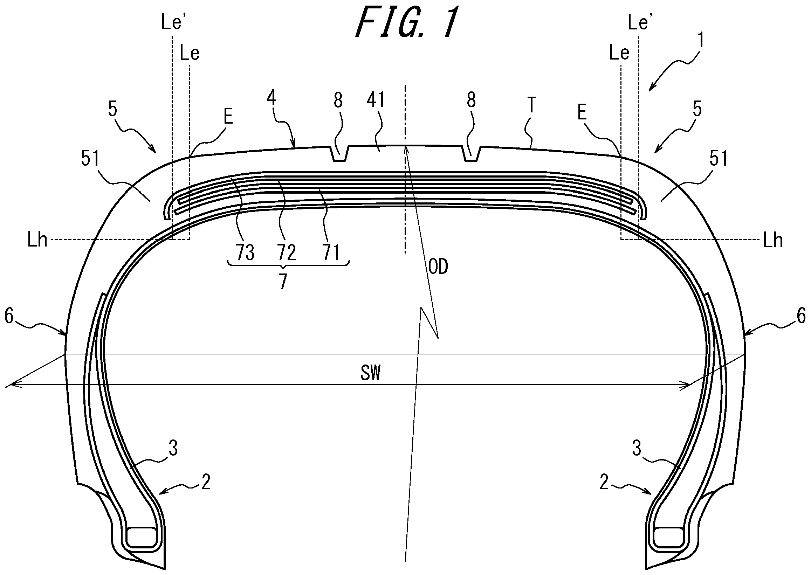

The tire 1 according to the first embodiment of the invention is, for example, as illustrated in the tire widthwise cross sectional view of FIG. 1, provided with at least a carcass 3 consisting of one or more carcass plies of radially arranged cords toroidally extending between a pair of bead portions 2, a tread rubber 41 disposed on the tire radial outer side of a carcass 3, and a buttress rubber 51 located on the tire widthwise outer side of the tread rubber 41, that forms a buttress portion 5.

More specifically, the tire 1 is provided with a tread portion 4, a pair of buttress portions 5 continuously extending in the lateral face of the tread portion 4, a pair of sidewall portions 6 continuously extending in each buttress portions 5 toward the tire radial inner side, and bead portions 2 continuously extending from each sidewall portion 6 toward the inner ends in the tire radial direction. Further the tire is provided with a carcass 3 consisting of one or more carcass plies (one carcass ply in the illustrated example), toroidally extending from one bead portion 2 to the other bead portion 2 to reinforce each of the above portions and a belt 7 consisting of one or more belt layers (three layers in the illustrated example) for reinforcing the tread portion 4.

In the tread portion 4, on the tire radial outer side of the carcass 3, more specifically, the tire radial outer side of the carcass 3 and the belt 7, and in the portion between each virtual line Le extending in the tire radial direction and through the tread ground contact end E, a tread rubber 41 is disposed.

In the embodiment illustrated in FIG. 1, circumferential main grooves 8 continuously extending in the tire circumferential direction may be disposed on the tread surface T, and in the illustrated example, three rib-like land portions are formed on the tread surface T by two circumferential main grooves 8. In the disclosure, a circumferential main groove 8 is not an essential feature.

In the buttress portion 5, on the tire outer surface side of the carcass 3, more specifically, the tire outer surface side of the carcass 3 and the belt 7, a buttress rubber 51 adjacently positioned on the tire widthwise outer side of the tread rubber 41 is disposed.

Specifically, the buttress portion 5 is, in a tire widthwise cross sectional view, a tire portion between a virtual line Le extending in the tire radial direction and passing through the tread ground contact end E, and a virtual line Lh extending in the tire widthwise direction and passing through a tire surface position which is distanced by a half of a peripheral length measured from the tread ground contact end E to another tire surface position which corresponds to the sectional width SW of the tire 1.

With this tire 1, in a state where the tire 1 is assembled to a rim, filled with an internal pressure of 250 kPa or more and no load is applied thereon, an SW/OD ratio of the sectional width SW to the outer diameter OD (mm) of the tire 1 is 0.26 or less if the tire 1 has a sectional width SW of less than 165 (mm), whereas the sectional width SW and the outer diameter OD (mm) of the tire 1 satisfy a relation of 2.135 × SW + 282.3 ≤ OD (hereinafter also referred to as "satisfy relation (1)") if the tire 1 has a sectional width SW of 165 (mm) or more. Because the above relation is satisfied, the tire 1 has a narrow-width, large-diameter shape, and therefore the rolling resistance performance of the tire 1 is improved (rolling resistance is decreased) and the weight of the tire 1 is reduced.

Further, the internal pressure of the tire 1 is preferably 250 kPa or more, and more preferably 250 kPa to 350 kPa. This is because, while a tire satisfying the above relation (1) tends to have an increased ground contact length, setting the internal pressure of the tire to be 250 kPa or more suppresses the increase in ground contact length, reduces the deformation of the tread rubber, and further reduces rolling resistance.

Further, from the viewpoint of reducing rolling resistance of the tire 1 and reducing weight of the tire 1, it is preferable that the sectional width SW and the outer diameter OD of the tire 1 satisfy a relation of -0.0187 × SW² + 9.15 × SW - 380 ≤ OD (hereinafter also referred to as relation (2)) if the internal pressure of the tire 1 is 250 kPa or more.

While the belt 7 may be formed of a belt layer having an arbitrary number of layers of one layer or more, in the illustrated example, it is formed, on the tire radial outer side of the carcass 3, in the order of, two inclined belt layers 71, 72 in which belt cords are mutually inclinedly intersecting in the opposite direction with respect to the tire circumferential direction, and then a one belt reinforcement layer 73 in which belt cords are extending along the tire circumferential direction.

In this example, two inclined belt layers 71 and 72 are each inclined by an angle of 35 ° or more with respect to the tire circumferential direction, and the inclined belt layer 71 on the tire radial inner side is wider than the inclined belt layer 72 on the tire radial outer side. Further, the one belt reinforcement layer 73 has a width such that covers the inclined belt layers 71 and 72. By making the inclined belt layers 71 and 72 incline by 35 ° or more with respect to the tire circumferential direction, the rolling resistance performance and cornering power upon cornering of a tire 1 having a sectional width SW and outer diameter OD of the above range can be improved.

For this tire 1, the dynamic storage modulus E' at 30 °C of the tread rubber 41 is 6.0 MPa to 12.0 MPa. In a narrow-width, large-diameter radial tire 1, setting the dynamic storage modulus E' of the tread rubber 41 to the above specific range improves the friction coefficient µ in a wet condition, and therefore improves wet performance. Further, adopting the above dynamic storage modulus E' improves the cornering power upon cornering and improves the steering stability. From the same viewpoint, the dynamic storage modulus E' is preferably 7.9 MPa to 12.0 MPa, and more preferably 8.0 MPa to 11.0 MPa.

Further, the loss tangent tanδ at 60 °C of the tread rubber 41 is 0.05 to 0.15. This way, the rolling resistance performance can be improved.

Because this tire 1 is provided with a tread rubber 41 such as above, the wet performance and rolling resistance performance could be improved. However, further improvement particularly in the wet performance and rolling resistance performance was required.

Therefore, for this tire 1, the dynamic storage modulus E' at 30 °C of the buttress rubber 51 is 1/2 or less of the dynamic storage modulus E' of the tread rubber 41, and the loss tangent tanδ at 60 °C of the buttress rubber 51 is 0.1 or less.

With this structure, it is possible to improve the rolling resistance performance of the tire 1. More specifically, when the tire 1 is rolled, the buttress rubber 51 adjacent to the contact surface of the tire 1 is bent and strain is caused, and therefore there was an influence in the rolling resistance which is determined by the product of the strain of the rubber and the rigidity of the rubber. In particular, the tire 1 has a narrow-width, large-diameter shape, and therefore the strain energy loss due to wiping upon ground contact of the tire 1 tended to be large. In light of the above, for this tire 1, by setting the dynamic storage modulus E' and the loss tangent tanδ of the buttress rubber 51 within the above range, the rigidity of the buttress rubber 51 is reduced compared to a situation where the dynamic storage modulus E' and a loss tangent tanδ of the buttress rubber 51 are out of the above range, for example, when the buttress rubber 51 is a rubber having characteristics similar to those of tread rubber 41, and therefore the rolling resistance is reduced (in other words, the rolling resistance performance is improved). Wiping means that, in a tire widthwise cross sectional view, due to the difference between the tire widthwise length of the tread surface T and the tire widthwise length of the belt 7 of the tread portion 4, the tread rubber 41 contacting the road surface when the tire 1 comes into contact with the ground is pulled by the belt together with the buttress portion 51 and shear strain on the tire widthwise inner side is caused.

When the dynamic storage modulus E' of the buttress rubber 51 is more than 1/2 of the dynamic storage modulus E' of the tread rubber 41, and the loss tangent tanδ of the buttress rubber 51 is 0.1 or less, the hysteresis loss resulting from the viscoelasticity of rubber is small. However, the strain energy (strain × stress) of the buttress rubber 51 is large and thus the strain energy loss is large. Therefore, the rolling resistance cannot be reduced.

Further, if the dynamic storage modulus E' of the buttress rubber 51 is 1/2 or less of the dynamic storage modulus E' of the tread rubber 41, and the loss tangent tanδ of the buttress rubber 51 is more than 0.1, the strain energy (strain × stress) of the buttress rubber 51 is small. However, the hysteresis loss resulting from the viscoelasticity of rubber is large, and thus the strain energy loss is large. Therefore, the rolling resistance cannot be reduced.

The dynamic storage modulus E' of the buttress rubber 51 is defined in relation to the dynamic storage modulus E' of the tread rubber 41 because, for the tread rubber 41, the strain energy (strain × stress) is smaller as the dynamic storage modulus E' is larger, whereas, for the buttress rubber 51, the strain energy (strain × stress) is larger as the dynamic storage modulus E' is larger.

Here, it is preferable that the dynamic storage modulus E' at 30 °C of the tread rubber 41 is 7.9 MPa to 11.0 MPa, and the dynamic storage modulus E' at 30 °C of the buttress rubber 51 is 3 MPa or less. This way, it is possible to further improve the wet performance and rolling resistance performance. More specifically, by setting the dynamic storage modulus E' of the tread rubber 41 within the above range, it is possible to improve the cornering power to thereby improve the steering stability, while improving the friction coefficient µ in a wet condition to thereby improve the wet performance. Further, by setting the dynamic storage modulus E' of the buttress rubber 51 to be 3 MPa or less, the strain energy loss of the buttress rubber 51 is further reduced when using the tread rubber 41 with a large dynamic storage modulus E' (dynamic storage modulus E' of more than 6.0 MPa).

It is preferable that, the buttress rubber 51 forming the buttress portion 5 has a dynamic storage modulus E' and loss tangent tanδ within the above predetermined ranges, as a whole. However, of the whole buttress rubber 51, the rubber, in a tire widthwise cross sectional view, between a virtual line Le extending in the tire radial direction and passing through the tread ground contact end E, and a virtual line Le' extending in the tire radial direction and passing through the tire surface position moved by 10 mm in peripheral length from the tread ground contact end E toward the tire widthwise outer side, to be outside of the above ranges for E' and tanδ. In other words, of the buttress rubber 51, it would be sufficient if the rubber between the tire radially inner end (virtual line Lh) of the buttress portion 5 and the above virtual line Le' has E' and tanδ which are at least within the above predetermined ranges. Further, of the buttress rubber 51, the rubber between the above virtual lines Le and Le' may have, for example, a dynamic storage modulus E' and loss tangent tanδ similar to that of the tread rubber 41. Further, even in such case, the rolling resistance performance can further be improved.

Further, the buttress rubber 51 may be formed of a rubber member different from the sidewall rubber forming the sidewall portion 6, or integrally formed of the same rubber member.

Further, as mentioned above, in the tire 1 of the illustrated example, each of the two inclined layers 71 and 72 are inclined by an angle of 35 ° or more with respect to the tire circumferential direction. If the inclined belt layers 71 and 72 are inclined by 35 ° or more, strain is more likely caused in the buttress portion 5 compared to when the inclination is less than 35 °, and therefore, it is particularly effective to set the dynamic storage modulus E' and loss tangent tanδ within the above mentioned ranges for a buttress rubber 51 of a tire 1 having a belt layer inclined by 35 ° or more.

The tread rubber 41 and buttress rubber 51 can be formed by kneading and vulcanizing, in accordance with an ordinary method, a rubber composition optionally containing, in addition to conventionally known rubber components, a conventionally known filler, age resistor, vulcanizing agent, vulcanization accelerator, processing oil, anti-scorch agent, zinc oxide, stearic acid and the like.

Conditions for kneading are not particularly limited, and using a Banbury mixer, roll kneader, internal mixer and the like, the rotor rotation speed, ram pressure, kneading temperature, and kneading time may be adjusted as appropriate depending on the formulation, the volume charged into the kneading apparatus and the like.

Further, as conditions for vulcanizing the rubber composition, the vulcanizing temperature may be, for example, 100 °C to 190 °C. The vulcanization time may be, for example, 5 minutes to 80 minutes.

Examples of rubber components of the tread rubber 41 and buttress rubber 51 include, for example, modified or unmodified synthetic rubber such as styrene-butadiene copolymer rubber (SBR), butadiene rubber (BR), polyisoprene rubber (IR), isobutylene isoprene rubber (IIR), halogenated butyl rubber, styrene-isoprene copolymer rubber (SIR) and chloroprene rubber (CR), and natural rubber (NR).

The method for modifying conjugated diene polymers such as SBR and BR is not particularly limited, and a conventionally known method may be applied. For example, the method described in WO2008050845 (method of allowing a modifying agent to react with active ends of conjugated diene-based polymer, and in the presence of a titanium-based condensation accelerator, performing condensation reaction involving the modifying agent) or the like may be applied.

A preferable example of the conjugated diene-based polymer is a copolymer of 1,3-butadiene and styrene.

Preferable examples of modifying agents include N,N-bis(trimethylsilyl)aminopropylmethyldimethoxysilane, N,N-bis(trimethylsilyl)aminopropylmethyldiethoxysilane, and 1-trimethylsilyl-2-ethoxy-2-methyl-1-aza-2-silacyclopentane.

Preferable examples of titanium-based condensation accelerators include tetrakis (2-ethyl-1,3-hexanediolato) titanium, tetrakis (2-ethylhexoxy) titanium, and titanium di-n-butoxide (bis-2,4-pentanedionate).

The above mentioned rubber components may be used alone or in combination of two or more.

Examples of the fillers include the conventionally known carbon black, silica, calcium carbonate, talc and clay. The above mentioned fillers may be used alone or in combination of two or more.

For this tire 1, it is preferable that the rubber composition forming the tread rubber 41 contains at least a rubber component and a filler, and that, in the rubber composition, the filler is contained in an amount of 50 parts by mass to 100 parts by mass with respect to 100 parts by mass of the rubber component. This way, there is an advantage of achieving excellent wear resistance and workability. From the same viewpoint, the filler is contained more preferably in an amount of 55 parts by mass to 85 parts by mass, and even more preferably in an amount of 75 parts by mass to 85 parts by mass with respect to 100 parts by mass of the rubber component. Further, it is more preferable that the filler is contained in an amount of 50 parts by mass to 90 parts by mass with respect to 100 parts by mass of the diene-based polymer (diene-based rubber).

For this tire 1, it is preferable that the filler of the tread rubber 41 contains silica, and that the silica is contained in the amount of 25 parts by mass to 100 parts by mass with respect to 100 parts by mass of the rubber component. This way, there is an advantage of achieving excellent wet performance. Further, from the same viewpoint, silica is contained more preferably in an amount of 50 parts by mass to 75 parts by mass, and even more preferably in an amount of 60 parts by mass to 75 parts by mass with respect to 100 parts by mass of the rubber component.

When using silica as the filler, the silica may be processed using a silane coupling agent.

Meanwhile, in order to set the dynamic storage modulus E' of the tread rubber 41 to be 6.0 MPa to 12.0 MPa as described above, the composition may be appropriately varied, for example, of 100 phr of diene-based polymer, the content of modified S-SBR may be appropriately varied in a range of 20 phr to 70 phr, and of 50 phr to 80 phr of the filler, the content of silica may be appropriately varied in a range of 30 phr to 80 phr.

Further, in order to set the loss tangent tanδ of the tread rubber 41 to be 0.05 to 0.15 as described above, the composition may be appropriately varied, for example, of 100 phr of diene-based polymer, the content of NR may be appropriately varied in a range of 0 phr to 20 phr and the content of modified S-SBR may be appropriately varied in a range of 20 phr to 70 phr, and of 50 phr to 80 phr of the filler, the content of silica may be appropriately varied in a range of 30 phr to 80 phr.

As used herein, "phr" refers to the content (parts by mass) of each component with respect to 100 parts by mass of the rubber component.

The tire size of the pneumatic radial tire for passenger vehicles of the embodiments of the invention may be specifically exemplified as: 105/50R16, 115/50R17, 125/55R20, 125/60R18, 125/65R19, 135/45R21, 135/55R20, 135/60R17, 135/60R18, 135/60R19, 135/65R19, 145/45R21, 145/55R20, 145/60R16, 145/60R17, 145/60R18, 145/60R19, 145/65R19, 155/45R18, 155/45R21, 155/55R18, 155/55R19, 155/55R21, 155/60R17, 155/65R13, 155/65R18, 155/70R17, 155/70R19, 165/45R22, 165/55R16, 165/55R18, 165/55R19, 165/55R20, 165/55R21, 165/60R19, 165/65R19, 165/70R18, 175/45R23, 175/55R18, 175/55R19, 175/55R20, 175/55R22, 175/60R18, 175/65R15, 185/45R22, 185/50R16, 185/50R20, 185/55R19, 185/55R20, 185/60R17, 185/60R19, 185/60R20, 195/50R20, 195/55R20, 195/60R19, 195/65R17, 205/50R21, 205/55R16, 205/55R20, 205/60R16, 205/60R18, 215/50R21, 215/60R17, 225/65R17.

In embodiments, it is preferable for the amount of grooves in the tread to be reduced from the viewpoint of the balance between the wet performance and other performances. Specifically, the groove volume ratio (groove volume V2/tread rubber volume VI) is 20 % or less, and the negative ratio (the ratio of the groove area to the tread surface area) is 20 % or less. Those values are smaller than standard values in a pneumatic radial tire for passenger vehicles of a conventional size.

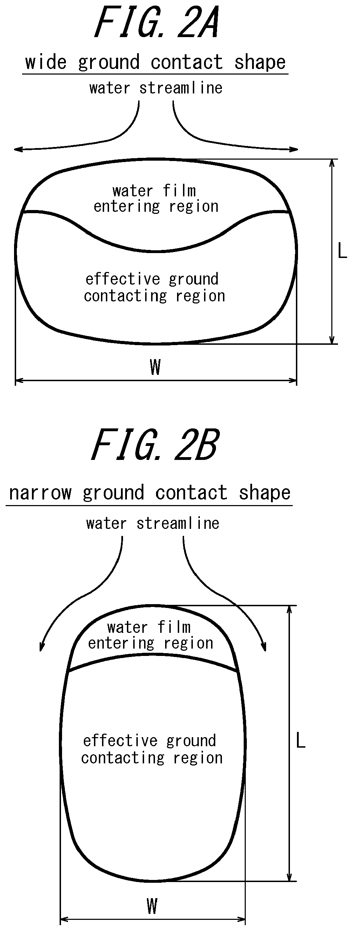

A general idea provides that the groove amount should be increased to improve wet performance. However, the pneumatic radial tire for passenger vehicles satisfying the above relations (1) and/or (2), having a narrow-width, large-diameter size, is reduced in the contact surface width W, and therefore, as illustrated in FIG. 2B by comparison with FIG. 2A, water is readily drained in the tire width direction. This means that the groove amount can be reduced without impairing the wet performance; rather, the land portion rigidity is improved, which leads to improving other performances such as cornering power.

Here, the groove volume ratio is defined as the ratio of V2/V1, in which VI represents the volume of the tread rubber disposed on the tire widthwise inner side than the both ends in the width direction of a maximum width belt layer having the maximum width in the tire width direction of the belt layers, while being on the tire radial outer side than a reinforcing member (belt layer and belt reinforcement layer) on the tire radial outermost side at the tire widthwise center position, and V2 stands for the total volume of grooves formed in the tread surface.

A pneumatic radial tire for passenger vehicles satisfying the above relations (1) and/or (2), having a narrow-width, large-diameter size, preferably has a pattern, mainly composed of rib-like land portions which are each partitioned in the tire width direction by two circumferential main grooves or by the circumferential main groove and a tread ground contact end E. Here, the rib-like land portions refer to land portions extending in the tire circumferential direction without having any widthwise grooves traversing in the tire width direction. This is in contrast to a standard radial pneumatic radial tire for passenger vehicles of a conventional size which often employs a pattern having widthwise grooves for improving wet performance.

This can be considered attributable to that the pneumatic radial tire for passenger vehicles satisfying the above relations (1) and/or (2), having a narrow-width, large-diameter size is narrow in the contact width and has a high contact pressure particularly in the use under a high internal pressure (of, for example, 250 kPa or more), and thus, grounding performance on a wet road can be improved when circumferential shearing rigidity is increased.

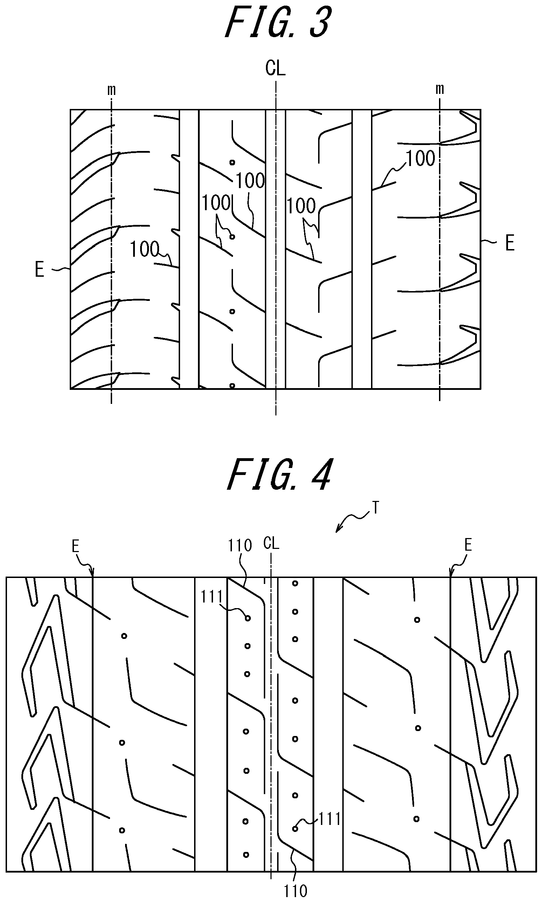

As an example of a pattern mainly composed of the rib-like land portions, for example, as in the embodiment shown in FIG. 3, the tread pattern may include only the rib-like land portions (that is, with no widthwise groove) in tire widthwise region accounting for 80% of the tread width TW (in FIG. 3, a region between two boundary lines m), with the tire equator plane CL being the center. The reason is that the drainage performance in this tire widthwise region significantly contributes to wet performance in particular.

Further, as illustrated in FIG. 3, sipes 100 may be provided on the tread surface, so as to improve various performances.

In particular, in terms of improving wet performance, the sipes are preferably one-side opening sipes 100 which opens at one end thereof to the groove while terminating at the other end thereof within the land portion. The one-side opening sipes 100 can increase circumferential shearing rigidity compared with both-side opening sipes while removing water films in the contact surface by means of the one-side opening sipes 100, to thereby produce an effect of improving wet performance resulting from the improvement in circumferential shearing rigidity. For the same reason, the one-side opening sipes 100 are preferably combined with a pattern mainly composed of the rib-like land portions, as illustrated in FIG. 3.

In the pneumatic radial tire for passenger vehicles of the disclosure, in view of further improving wet performance, circumferential sipes 110 and/or small holes 111 are preferably provided in the tread surface as illustrated in FIG. 4, when the tread rubber uses high rigidity rubber. The use of high rigidity rubber increases circumferential shearing rigidity, which accelerates draining of water. On the other hand, however, the effective ground contact area between the tire and the road surface may decrease to depress wet performance. In light thereof, circumferential sipes 110 and/or small holes 111 which reduce the compression rigidity of the rubber may be used, to thereby suppress compression rigidity of the rubber to increase the effective ground contact area. Here, the circumferential sipes 110 and/or the small holes 111 have an effect of reducing the circumferential shearing rigidity, which however is sufficiently small enough to maintain the wet performance improving effect resulting from the improvement in circumferential shearing rigidity.

In embodiments of the invention, in the case where the mounting direction of the tire with respect to the vehicle (vehicle-mounted direction) is designated, difference may be provided to the negative ratio between the tire widthwise half portions on the inside and outside in the vehicle-mounted direction, which boarder at the tire equator plane CL.

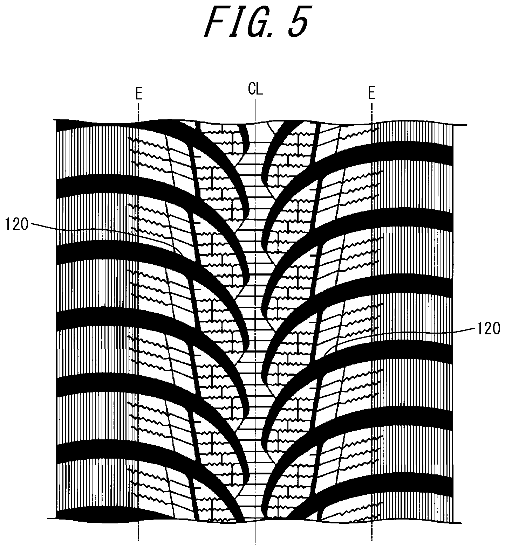

In embodiments of the invention, as illustrated in FIG. 5, the pattern may be configured to have a widthwise groove 120 extending in the tire width direction from the vicinity of the tire equator plane CL to the tread ground contact end E. In this case, the circumferential groove may optionally be omitted. Such pattern which is composed mainly of the widthwise grooves 120, can effectively contribute to on-snow performance in particular.

In embodiments of the invention, of the rib-like land portions, the shoulder rib-like land portion partitioned by the circumferential main groove on the tire widthwise outermost side and the tread ground contact end E may employ various configurations. For example, in a tire for which the vehicle-mounted direction is designated, the shoulder rib-like land portion may be varied in width in the tire width direction between the vehicle-mounted direction outside and inside. Here, in consideration of the steering stability, the shoulder rib-like land portion on the vehicle-mounted direction outside is preferably larger in width in the tire width direction than the shoulder rib-like land portion on the vehicle-mounted direction inside.

In view of suppressing buckling so as to improve cornering power, the pneumatic radial tire for passenger vehicles satisfying the above relations (1) and/or (2), having a narrow-width, large-diameter size described herein preferably includes one-end open grooves each extending from the circumferential main groove to the vehicle-mounted direction inside when the tire is mounted on a vehicle.

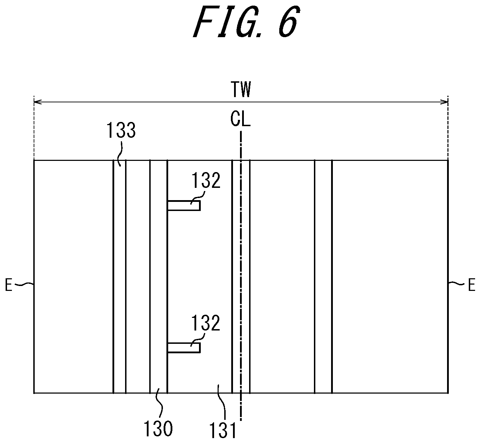

More specifically, as illustrated in FIG. 6, the tire preferably includes, on the tread surface, in at least one of the half portions across the tire equator plane CL as the border, a tread end side main groove 130 extending in the tread circumferential direction, the tread end side main groove 130 being adjacent to the tread ground contact end E while being spaced apart from the tread ground contact end E in the tread width direction at a distance by 25% of the tread width TW, and at least one one-end open groove 132, in one of the land portions 131 adjacent to the tread ground contact end side land portion partitioned by the tread end side main groove 130 and the tread ground contact end E, the one-end open groove 132 extending from the tread end side main groove 130 and extending in the tread width direction to remain within the adjacent land portion 131. Here, the groove 133 of FIG. 6 is a shallow groove smaller in groove depth than the main groove.

In the case of a pneumatic radial tire for passenger vehicles satisfying the above relations (1) and/or (2), having a narrow-width, large-diameter size, the tire is subjected to compressive stress on the vehicle-mounted direction outside while subjected to tensile stress on the vehicle-mounted direction inside. The stresses cause deformation in the tread rubber, which deforms the belt so as to inadvertently raise the contact surface off the ground.

Here, the tire has the one-end open groove 132 extending in the tread width direction from the tread ground contact end side main groove 130 to remain within the land portion 131. Thus, the tire is structured, on the vehicle-mounted direction outside within the land portion, to have the one-end open groove 132 closed under compressive stress, which can suppress deformation of the tread and belt under compressive stress, as compared with the case where the one-end open groove 132 is not provided or the one-end open groove 132 is not extended to the vehicle-mounted direction outside.

Further, the one-end open groove 132 remains within the land portion, and thus, as compared with the case where the one-end open groove 132 extends toward the vehicle-mounted direction inside, the tire is increased in rigidity against tensile stress on the vehicle-mounted direction inside to thereby suppress deformation of the tread and the belt.

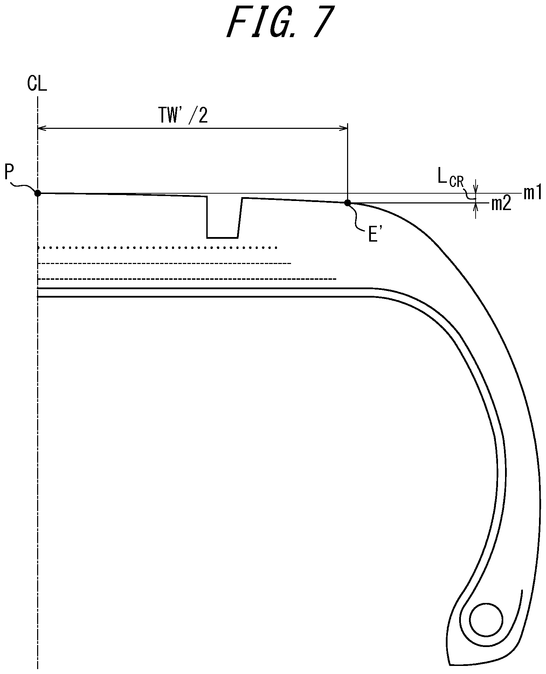

In the case of a pneumatic radial tire for passenger vehicles of an embodiment of the invention satisfying the above relations (1) and/or (2), having a narrow-width, large-diameter size, as illustrated in FIG. 7, the distance in the tire radial direction between the straight line m1 and the straight line m2 in a tire widthwise section is defined as a fall height L_{CR} and the tread width of the tire is defined as TW', which preferably satisfies the ratio L_{CR}/TW' of 0.045 or less, the straight line m1 passing through a point P on the tread surface at the tire equator plane CL while being parallel to the tire width direction, the straight line m2 passing through the ground contact end E' while being parallel to the tire width direction. With the ratio L_{CR}/TW' being defined to fall within the aforementioned range, the tire has a crown portion flattened (planarized) to increase the contact area, alleviating an input (pressure) from the road surface to reduce the deflection rate in the tire radial direction, to thereby improve the tire in durability and wear resistance.

As used herein, the "ground contact end E'" refers to the tire widthwise endpoints at the ground contact surface contacting a flat plate of when the tire is assembled to a rim, filled with the maximum air pressure defined for each vehicle to which the tire is to be assembled, vertically placed on a flat plate, and applied with weight corresponding to the maximum load defined for each vehicle to which the tire is to be assembled.

In embodiments of the invention, the tread rubber may be formed of a plurality of different rubber layers laminated in the tire radial direction. Rubbers for use as the aforementioned plurality of rubber layers may be different from one another in such properties as tangent loss, modulus, hardness, glass transition temperature, and material. Further, the ratio of thickness in the tire radial direction of the plurality of rubber layers may vary in the tire width direction. Alternatively, the groove bottom of the circumferential main groove, for example, may alone be formed of a rubber layer different from the surroundings.

In embodiments of the invention, the tread rubber may be formed of a plurality of rubber layers different from one another in the tire width direction. Rubbers for use as the aforementioned plurality of rubber layers may be different from one another in such properties as tangent loss, modulus, hardness, glass transition temperature, and material. In a case where the tread rubber is formed using different rubber layers in the tire width direction, the "dynamic storage modulus E' at 30 °C of the tread rubber" and "the loss tangent tanδ at 60 °C of the tread rubber" refer to the values obtained by adding up the each value obtained by multiplying the dynamic storage modulus E' and loss tangent tan δ of each layer by the tire widthwise length of the rubber layer , and then dividing the values by the tire widthwise length of the entire rubber layer.

The tire of embodiments of the invention preferably has an inclined belt layer formed of a rubberized layer of cords extending while being inclined with respect to the tire circumferential direction, and in such case, the inclined belt layer may be formed by a single layer. However, in a radial tire for passenger vehicles satisfying the above relations (1) and/or (2), having a narrow-width, large-diameter size, the shape of the contact patch during cornering is easily distorted if the inclined belt layer consists of only a single layer, and therefore it is preferable to adopt an inclined belt layer extending in the direction where the cords respectively intersect between two or more layers. For the pneumatic radial tire for passenger vehicles of embodiments of the invention, a belt structure in which two belt layers form an inclined belt layer is most preferable.

In embodiments of the invention, the width in the tire width direction of the maximum width inclined belt layer having the widest width in the tire width direction preferably has a tire widthwise width of 90 % to 115 % of the tread width TW, and particularly preferably of 100 % to 105 % of the tread width TW.

In embodiments of the invention, metal cords, in particular, steel cords are the most typical examples of belt cords of the inclined belt layer. However, organic fiber cords may also be used. The steel cords may include steel as a main component, and also contain various micro inclusions such as carbon, manganese, silicon, phosphorous, sulfur, copper, and chromium.

In embodiments of the invention, belt cords of the inclined belt layer may use monofilament cords and cords obtained by twisting a plurality of filaments. Various designs may be adopted for the twist structure, which may be different in, for example, sectional structure, twist pitch, twist direction, distance of adjacent filaments. Further, cords obtained by twisting filaments of different materials may also be used, which may employ various twist structures such as single twist, layer twist, and a multi twist without being limited to any particular sectional structure.

In embodiments of the invention, the inclination angle of the belt cords of the inclined belt layer is preferably set to be 10 ° or more with respect to the tire circumferential direction.

In embodiments of the invention, it is preferable that the inclination angle of the belt cords of the inclined belt layers with respect to the tire circumferential direction is a high angle, specifically, 35 ° or more, and particularly, in a range of 55 ° to 85 °.

The reason for this is that, by setting the inclination angle to be 35 ° or more, the rigidity relative to the tire width direction is increased, and the steering stability especially upon cornering is improved. Another reason is that, the shearing deformation of the rubber between layers is reduced and the rolling resistance performance is improved.

The tire of embodiments of the invention may have a circumferential belt formed of one or more layers of circumferential belt layers on the tire radial outer side of the inclined belt layer.

When the inclination angles θ1 and θ2 of the belt cords of the inclined belt layer are 35 ° or more, it is preferable that the circumferential belt has a tire circumferential rigidity per unit width of the center region C including the tire equatorial plane CL higher than the tire circumferential rigidity per unit width of other regions.

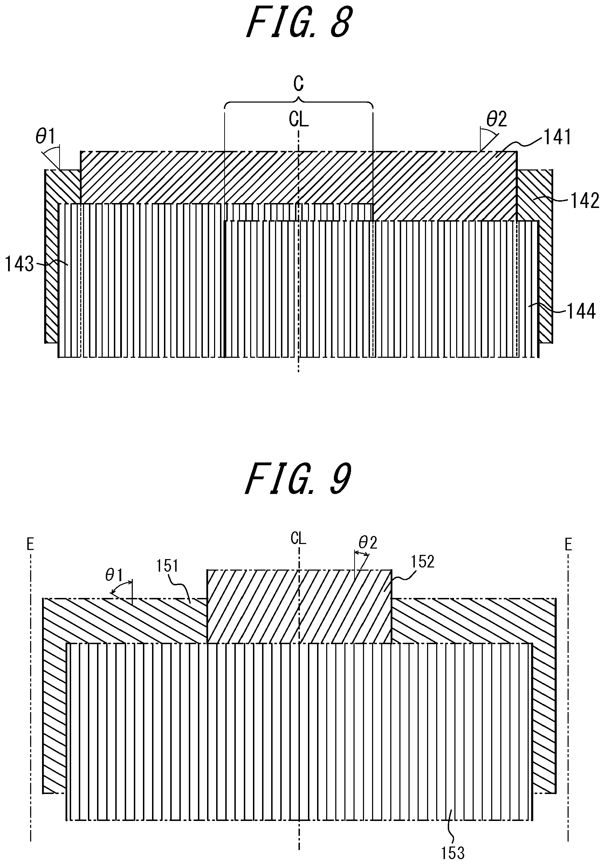

FIG. 8 schematically illustrates one example of the belt structure, in which circumferential belt layers 143, 144 are laminated on the tire radial outer side of inclined belt layers 141, 142, and in the center region C, the circumferential belt layers 143, 144 are overlapped with each other in the tire radial direction.

For example, it is shown in FIG. 8 that, by setting the number of circumferential belt layers in the center region C to be more than other regions, the tire circumferential rigidity per unit width of the center region C can be made higher than the tire circumferential rigidity per unit width of other regions.

In a high frequency region of 400 Hz to 2 kHz, many tires having belt cords of the inclined belt layer inclined at an angle with respect to the tire circumferential direction of 35° or more are deformed such that the entire tread surface greatly vibrates in primary, secondary, tertiary, etc. vibration modes in a sectional direction, and thus a large noise emission is generated. Therefore, locally increasing the tire circumferential rigidity of the central region of the tread in the tire width direction makes the central region of the tread in the tire width direction less prone to expansion in the tire circumferential direction, thereby suppressing expansion of the tread surface in the tire circumferential direction. As a result, noise emission can be reduced.

Further, as mentioned above, in a tire in which the tire circumferential rigidity of the center region that includes the tire equatorial plane CL has been increased, it is preferable that the tread has a land portion that is continuous in the tire circumferential direction in a region including at least the tire equatorial plane CL of the tread surface. When the circumferential main groove is disposed on the tire equatorial plane CL or the vicinity thereof, the rigidity of the tread in the region could decrease, and drastically shorten the ground contact length in the land portion defining the circumferential main groove. Therefore, it is preferable to dispose a land portion (rib-like land portion) that is continuous in the tire circumferential direction over a certain region that includes the tire equatorial plane CL from the viewpoint of improving noise performance without reducing the cornering power.

FIG. 9 schematically illustrates another example of the belt structure, in which a single-layered circumferential belt layer 153 is laminated on the tire radial outer side of two inclined belt layers 151, 152.

In the disclosure, as in the example shown in FIG. 9, when the inclination angle of the belt cords of the inclined belt layer is 35 ° or more, it is preferable that the inclined belt layers include at least two inclined belt layers having different tire widthwise widths, and an inclination angle θ1 with respect to the tire circumferential direction of the cords forming the inclined belt layer having the widest width and an inclination angle θ2 with respect to the tire circumferential direction of the cords forming the inclined belt layer having the narrowest width satisfy relations of 35 ° ≤ θ1 ≤ 85 °, 10 ° ≤ θ2 ≤ 30 °, and θ1 > θ2.

In a high frequency region of 400 Hz to 2 kHz, many tires provided with inclined belt layers having belt cords inclined at an angle with respect to the tire circumferential direction of 35 ° or more are deformed such that the entire tread surface greatly vibrates in primary, secondary, tertiary, etc. vibration modes in a sectional direction, and thus a large noise emission is generated. Therefore, locally increasing the tire circumferential rigidity of the central region of the tread in the tire width direction makes the central region of the tread in the tire width direction less prone to expansion in the tire circumferential direction, thereby suppressing expansion of the tread surface in the tire circumferential direction. As a result, noise emission can be reduced.

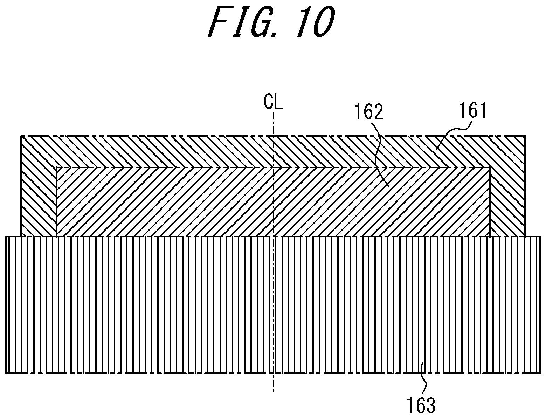

FIG. 10 schematically illustrates another example of the belt structure, in which a single-layered circumferential belt layer 163 is laminated on the tire radial outer side of two inclined belt layers 161, 162.

In the radial tire for passenger vehicles satisfying the above relations (1) and/or (2), having a narrow-width, large-diameter size, the circumferential belt layers are preferably highly rigid, and more specifically, preferably formed of a rubberized layer of cords extending in the tire circumferential direction, which preferably satisfy 1500 ≥ X ≥ 750 where X is defined as X = Y × n × m, Y representing the Young's modulus (GPa) of the cords, n representing the number of the cords (cords/50mm), m representing the number of the circumferential belt layers. The radial tire for passenger vehicles satisfying the above relations (1) and/or (2), having a narrow-width, large-diameter size, is apt to be in a shape which is subjected to local deformation in the tire circumferential direction against input from the road surface upon cornering, such that the contact surface is likely to be in a substantially triangular shape, that is, the contact length in the circumferential direction is largely changed depending on the position in the tire width direction. In contrast, the circumferential belt layers are formed to have high rigidity, so as to improve ring rigidity of the tire, which suppresses deformation in the tire circumferential direction, with the result that deformation in the tire width direction may also be suppressed by the incompressibility of the rubber, making the ground contact shape unlikely to change. Further, the improved ring rigidity promotes eccentric deformation, which simultaneously improves rolling resistance. The effect of improving rolling resistance is particularly improved extensively in the pneumatic radial tire for passenger vehicles satisfying the above relations (1) and/or (2), having a narrow-width, large-diameter size.

Further, when the highly rigid circumferential belt layers are used as described above, belt cords of the inclined belt layers are preferably inclined relative to the tire circumferential direction at a high angle, specifically, of 35 ° or more. The use of the highly rigid circumferential belt layers increases rigidity in the tire circumferential direction, which may inadvertently reduce the contact length in some tires. In light thereof, belt layers inclined at a high angle may be used to reduce the out-of-plane flexural rigidity in the tire circumferential direction to increase the stretching of the rubber in the tire circumferential direction upon tread surface deformation, to thereby suppress reduction in contact length.

Further, in the disclosure, waved cords may be used for the circumferential belt layers, in order to increase breaking strength. The breaking strength may similarly be increased by using high-elongation cords (for example, with the elongation at break of 4.5 % to 5.5 %).

Further, in embodiments of the invention, various materials may be adopted as the circumferential belt layers, as typically exemplified by rayon, nylon, polyethylene naphthalate (PEN), polyethylene terephthalate (PET), aramid, glass fiber, carbon fiber, steel, and the like, with organic fiber cords being particularly preferred in terms of weight reduction.

Here, in embodiments of the invention, the circumferential belt layers may adopt, as the cords thereof, monofilament cords, cords obtained by twisting a plurality of filaments, or hybrid cords obtained by twisting filaments of different materials.

Further, in embodiments of the invention, the number of cords of the circumferential belt layers may be in a range of 20 to 60 per 50 mm, without being limited thereto.

Further, in embodiments of the invention, distributions may be provided in the tire width direction in terms of such properties as rigidity, material, the number of layers, and the density of the cords. For example, the number of the circumferential belt layers may be increased, for example, only at the tire widthwise end. On the other hand, the number of the circumferential belt layers may be increased only in the center portion.

Further, in the disclosure, the circumferential belt layers may be designed to be wider or narrower than the inclined belt layers. For example, the circumferential belt layers may be designed to have a width in a range of 90 % to 110 % of the width of the widest inclined belt layers largest in the tire widthwise width among the inclined belt layers.

Here, the circumferential belt layers may be configured as spiral layers, which is particularly advantageous in terms of production.

Here, in embodiments of the invention, the circumferential belt layers may optionally be omitted.

In embodiments of the invention, the carcass line may adopt various structures. For example, the carcass maximum width position in the tire radial direction may be closer to either of the bead portion side or the tread side. For example, the carcass maximum width position may be disposed on the tire radial outer side from the bead base portion, within a range of 50 % to 90 % of the tire section height.

Further, in embodiments of the invention, the carcass may also employ various structures. For example, the number of carcasses may be in a range of 20 to 60 per 50 mm, without being limited thereto.

Furthermore, for example, the carcass may have a folded end positioned on the tire radial inner side relative to the tire radial end of a bead filler. Alternatively, the carcass folded end may be positioned on the tire radial outer side relative to the tire radial outer side end of the bead filler or the tire maximum width position, or may be extended, in some cases, to the tire widthwise inner side relative to the tire widthwise end of the inclined belt layer. Further, in the case where the carcass is formed of a plurality of carcass plies, the folded ends of the carcasses may be disposed at different positions in the tire radial direction. Alternatively, the carcass folded part may not be included in the first place; instead, the carcass may be structured to be inserted between a plurality of bead core members, or wound around the bead core.

In the pneumatic radial tire for passenger vehicles satisfying the above relations (1) and/or (2), having a narrow-width, large-diameter size, the tire side portion is preferably reduced in thickness. "The tire side portion may be reduced in thickness" in such a manner that, for example, the bead filler may be configured to have a tire widthwise sectional area S1 which is one times or more and four times or less of the tire widthwise sectional area S2 of the bead core. Further, the sidewall portion may have a gauge Ts at the tire maximum width portion, and the bead core may have a bead width Tb at the tire radial center position, with the ratio of Ts to Tb (Ts/Tb) falling within a range of 15 % or more and 40 % or less. Further, the sidewall portion may have a gauge Ts at the tire maximum portion, and the carcass may have a carcass cord with a diameter Tc, with the ratio of Ts to Tc (Ts/Tc) being 5 or more and 10 or less.

The gauge Ts is a total thickness of all the members including rubber, the reinforcement member, and the inner liner. Further, when the tire is structured to have the bead core divided into a plurality of small bead cores by the carcass, Tb refers to the distance between the widthwise innermost end and the outermost end portion of all the small bead cores.

In embodiments of the invention, the tire may have the tire maximum width position disposed in a range of 50 % to 90 % of the tire section height, on the tire radial outer side from the bead base portion.

The tire of embodiments of the invention may be structured to include a rim guard.

The tire of embodiments of the invention may be structured without optionally including the bead filler.

In embodiments of the invention, the bead core may employ various structures including a cross-sectional circular shape or cross-sectional polygon shape. Further, a structure of winding the carcass around the bead core or a structure of inserting the carcass between a plurality of bead core members, can be employed.

In embodiments of the invention, the bead portion may further include, for example, a rubber layer and a cord layer for reinforcement purposes. These additional members may be disposed in various positions with respect to the carcass and the bead filler.

In embodiments of the invention, it is preferable to make the inner liner thick from the viewpoint of reducing the vehicle noise of 80 Hz to 100 Hz. Specifically, it is preferable to make the inner liner have a thickness of around 1.5 mm to 2.8 mm which is thicker than a normal inner liner (thickness of around 1.0 mm).

It has been found that, regarding a pneumatic radial tire for passenger vehicles satisfying the above relations (1) and/or (2), having a narrow-width, large-diameter size, the vehicle noise of 80 Hz to 100 Hz tends to deteriorate especially under use of high internal pressure. By making the inner liner thick, the vibration damping performance is enhanced, and the vehicle noise of 80 Hz to 100 Hz is decreased. As to the inner liner, since the loss contributing to rolling resistance is smaller than other members such as the tread, it is possible to minimize the deterioration of rolling resistance and improve noise performance.

In embodiments of the invention, the inner liner may be formed with a rubber layer mainly composed of butyl rubber or with a film layer mainly composed of resin.

In embodiments of the invention, in order to reduce cavity resonance, the tire inner surface may include a porous member arranged thereon or may be treated with an electrostatic flocking process.

The tire of embodiments may optionally include, on the tire inner surface, a sealant member for preventing air leakage upon a blowout of the tire.

The pneumatic radial tire for passenger vehicles of embodiments of the invention may optionally be configured as a side reinforced run flat tire having a reinforcing rubber having a crescent section disposed on the tire side portion.

In the pneumatic radial tire for passenger vehicles, having a narrow-width, large-diameter size, the side portion may be simplified in structure when configured as a side reinforced run flat tire, to thereby realize both the run flat durability and the fuel efficiency. This is based on the finding that, in the case of a pneumatic radial run flat tire for passenger vehicles satisfying the above relations (1) and/or (2), having a narrow-width, large-diameter size, the tire undergoes, during run-flat traveling, relatively small deformation in the side portion and the tread portion but goes through relatively large deformation from the shoulder portion to the buttress portion. Such deformation is in contrast to that a conventional size tire undergoes relatively large deformation in the side portion.

Such deformation unique to a tire satisfying the above relations (1) and/or (2), having a narrow-width, large-diameter size, allows the tire to have a simplified structure to sufficiently ensure run flat durability and can also improve further the fuel efficiency. Specifically, at least any one of the following conditions (i) to (iii) may be satisfied, to thereby simplify the tire in structure.

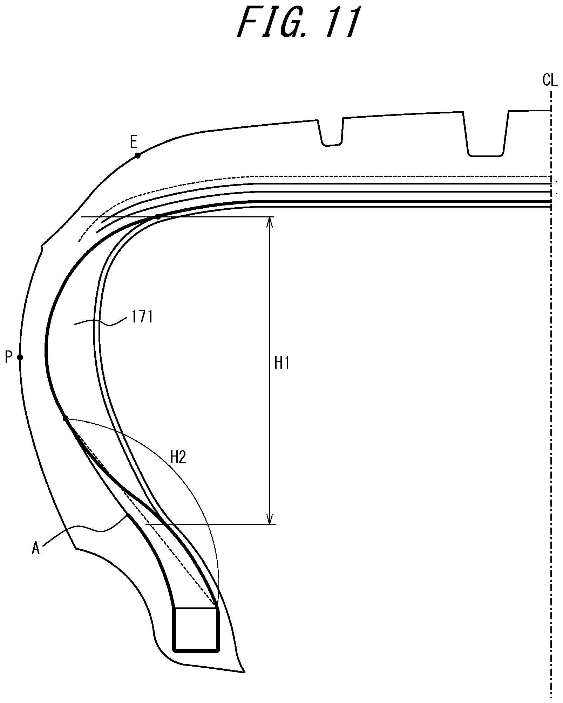

FIG. 11 is a tire widthwise cross sectional view of the tire according to the third embodiment of the invention in the case where the tire is a run flat tire.
(i) As illustrated in FIG. 11, the folded end A of the carcass folded part is positioned on the tire radial inner side than the tire maximum width position P. (ii) The tire in a reference state as being assembled to a rim and filled with a predetermined internal pressure with no load applied thereon satisfies a relation of 1.8 ≤ H1/H2 ≤ 3.5, where H1 represents the tire radial maximum length of the side reinforcing rubber 171 in a tire widthwise section and H2 represents the length of a line segment connecting the tire radial outermost side point of the bead filler and the tire radial outermost side point of the bead core. (iii) The tire in a reference state as being assembled to a rim and filled with a predetermined internal pressure with no load applied thereon satisfies a relation of 10 (mm) ≤ (SW/OD) × H1 ≤ 20(mm), where H1 (mm) represents the tire radial maximum length of the side reinforcing rubber 171 in a tire widthwise section.

When the pneumatic radial tire for passenger vehicles satisfying the above relations (1) and/or (2), having a narrow-width, large-diameter size is configured as a side reinforced run flat tire, the circumferential main groove on the tire widthwise outermost side is arranged closer to the tire equator plane CL in the tire width direction, to thereby realize further improvement in run flat durability. This is based on the finding that, in the case of a pneumatic radial run flat tire for passenger vehicles satisfying the above relations (1) and/or (2), having a narrow-width, large-diameter size, the tire undergoes relatively small deformation in the side portion and the tread portion but goes through relatively large deformation from the shoulder portion to the buttress portion during run-flat traveling. Such deformation is in contrast to that a conventional size tire undergoes relatively large deformation in the side portion. As described above, in a narrow-width, large-diameter tire satisfying the above relations (1) and/or (2), which undergoes unique deformation, the circumferential main groove on the tire widthwise outermost side may be arranged closer to the tire equator plane CL, to thereby increase grounding property from the shoulder land portion to the buttress portion in run-flat traveling, which alleviates the contact pressure. As a result, the tire can further be improved in run flat durability.

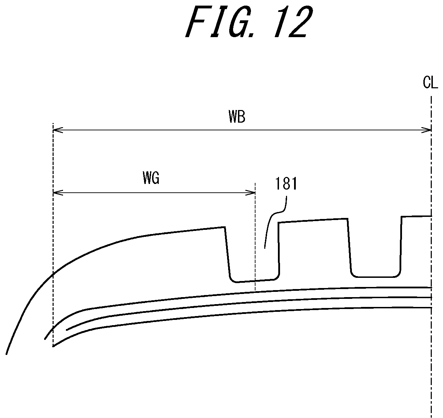

FIG. 12 is a tire widthwise cross sectional view of tire according to the forth embodiment of the invention in the case where the tire is a run flat tire.

Specifically, the tire in a reference state as being assembled to a rim and filled with a predetermined internal pressure with no load applied thereon preferably satisfies a relation of 0.5 ≤ WG/WB ≤ 0.8, where WB represents the half width in the tire width direction of a belt layer maximum in width in the tire width direction of the one or more belt layers in a tire widthwise section and WG represents a tire widthwise distance from the tire widthwise end of a belt layer maximum in width in the tire width direction to the tire widthwise center position of the circumferential main groove 181 in the tire widthwise outermost side of the one or more circumferential main grooves.

The foregoing has explained embodiments of this disclosure with reference to the drawings. However, the pneumatic radial tire for passenger vehicles of embodiments is not particularly limited to the aforementioned examples, and appropriate changes may be made within departing from the scope of the appended claims.

### EXAMPLES

Embodiments of the invention will be described further in detail by Examples hereinafter without being restricted thereto by any means.

To confirm the effects of the embodiments, tires of Examples 1 to 4 and tires of Comparative Examples 1 to 7 were produced.

The tire of Example 1 is a tire having a tire size of 165/60R19 shown in FIG. 1, and has the structure shown in Table 1. Further, the tire of Example 1 is provided with two inclined belt layers in which belt cords are mutually inclinedly intersecting in the opposite direction with respect to the tire circumferential direction and one belt reinforcement layer, and three circumferential main grooves (circumferential main grooves having groove width of 7.5 mm) are disposed on the tread surface. In the tire of Example 1, the width of the tread surface in the tire width direction is 125 mm.

The tires of Examples 2 to 4 are the same as the tire of Example 1 except that the structures are changed as shown in Table 1.

The tires of Comparative Examples 1 to 3 and 6 are tires having a tire size of 195/65R15, which have the structures shown in Table 1. Further, the tire of Comparative Example 1 is provided with two inclined belt layers, in which belt cords are mutually inclinedly intersecting in the opposite direction with respect to the tire circumferential direction, and one belt reinforcement layer, and three circumferential grooves (circumferential grooves having groove width of 8.5mm) are disposed on the tread surface. In the tire of Comparative Example 1, the width of the tread surface in the tire width direction is 145 mm.

The tires of Comparative Examples 4, 5 and 7 are the same as the tire of Example 1 except that the structures are changed as shown in Table 1.

Each of the above sample tires were evaluated by the method described below.

### [Wet performance]

Each of the above sample tires were assembled to a rim under the following conditions, filled with internal pressure, assembled to a vehicle, and then driven on a wet road surface at the speed of 80 km/h. The stopping distance (m) upon full braking after driving in the above state was measured, and the mean deceleration (m/s²) = V²/25.92L during the above was calculated (calculated as a = v²/2L from mv²/2 = maL where a represents mean deceleration, v represents initial speed, m represents mass, and L represents stopping distance. Friction coefficient in a wet condition (wet µ)). The evaluation results are indicated with indices in which the reciprocals of the values of each sample tire are used and the tire described in Comparative Example 1 is 100. The larger index value indicates better wet performance.

### Examples 1 to 4, Comparative Examples 4, 5, and 7: Rim size 5.5J19, Internal pressure 300 kPa

### Comparative Examples 1 to 3, and 6: Rim size 6.5J15, Internal pressure 220 kPa

### [Rolling resistance performance]

Each of the above sample tires were, under the same measuring conditions for wet performance, assembled to a rim, filled with internal pressure, applied with the maximum load defined for each tire, and the rolling resistance was measured under the condition of drum rotational velocity of 100 km/h.

The evaluation results are indicated with indices in which the reciprocals of the values of each sample tire are used and the tire described in Comparative Example 1 is 100. The larger index value indicates better rolling resistance performance.

The dynamic storage modulus E' and loss tangent tanδ were measured using a spectrometer manufactured by Toyo Seiki Seisaku-sho, Ltd., and applying an initial load of 160 g on test pieces of thickness: 2 mm; width: 5 mm; length: 20 mm under the condition of initial strain: 1 %; and frequency: 50 Hz. Here, the dynamic storage modulus E' was measured at 30 °C, and the loss tangent tanδ was measured at 0 °C and 60 °C.

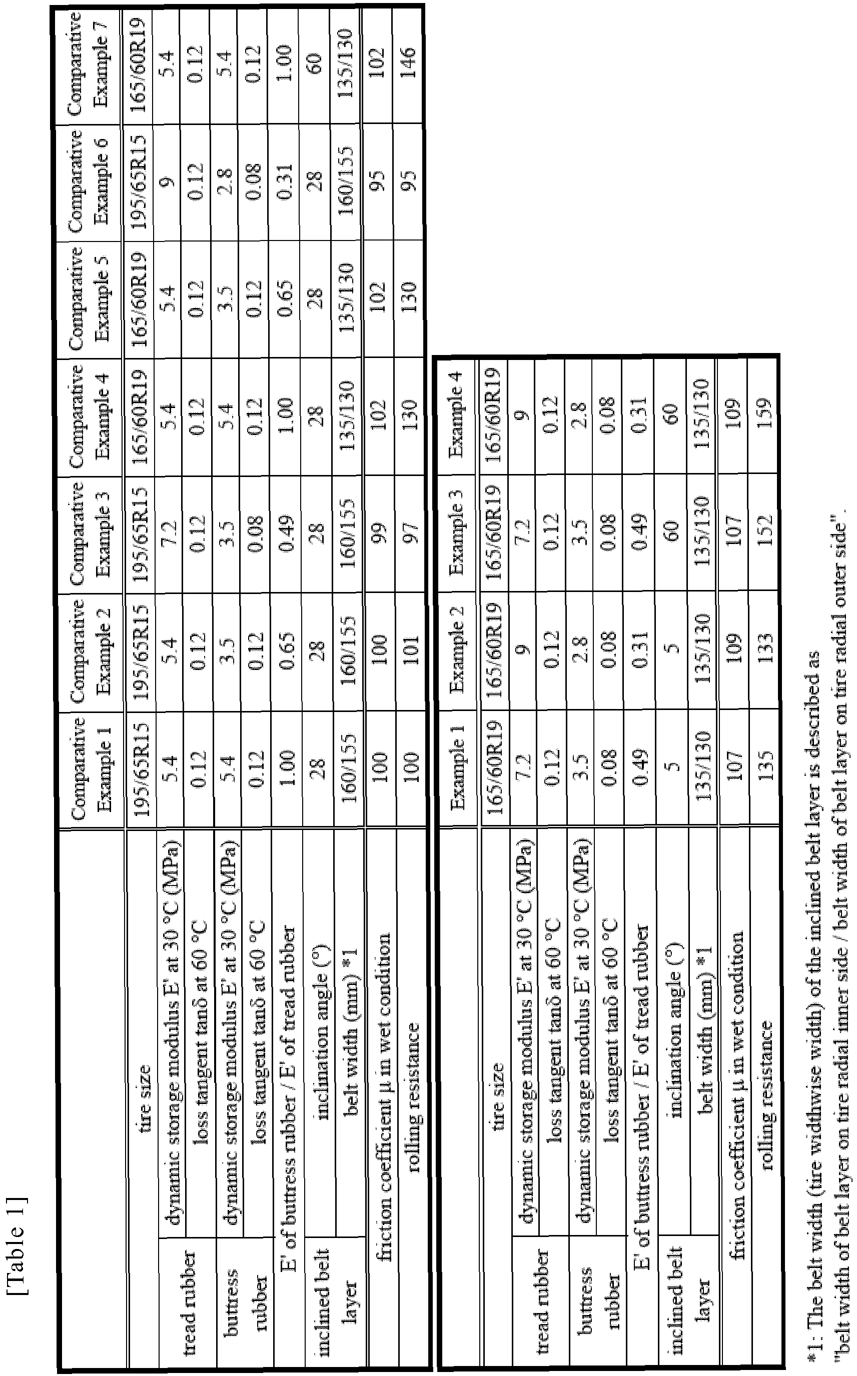

It can be seen from Table 1 that the wet performance and rolling resistance performance are more improved in the tires of Examples 1 to 4 compared to the tires of Comparative Examples 1 to 7.

### INDUSTRIAL APPLICABILITY

Embodiments of the inventionprovides a narrow-width, large-diameter radial tire which is a pneumatic radial tire for passenger vehicles with improved wet performance and rolling resistance performance.

### REFERENCE SIGNS LIST

1: Pneumatic radial tire for passenger vehicles (passenger-vehicle pneumatic radial tire)
2: Bead portion
3: Carcass
4: Tread portion
41: Tread rubber
5: Buttress portion
51: Buttress rubber
6: Sidewall portion
7: Belt
71, 72: Inclined belt layer
73: Belt reinforcement layer
8: Circumferential main groove
100: Sipe
110: Circumferential sipe
111: Small hole
120: Widthwise groove
130: Tread end side main groove
131: Adjacent land portion
132: One-end open groove
133: Shallow groove
141, 142: Inclined belt layer
143, 144: Circumferential belt layer
151, 152: Inclined belt layer
153: Circumferential belt layer
161, 162: Inclined belt layer
163: Circumferential belt layer
171: Side reinforcing rubber
181: Circumferential main groove
CL: Tire equatorial plane
E: Tread ground contact end
Le, Lh, Le': Virtual line
T: Tread surface

## Claims

1. A passenger-vehicle pneumatic radial tire (1) comprising:
a carcass (3) consisting of one or more carcass plies of radially arranged cords toroidally extending between a pair of bead portions (2);
a tread rubber (41) disposed on a tire radial outer side of the carcass, the tread rubber forming a tread surface; and
a buttress rubber (51) positioned on a tire widthwise outer side of the tread rubber, the buttress rubber forming a buttress portion, **characterised in that**:
when the tire is assembled to a rim and filled with an internal pressure of 250 kPa or more,
an SW/OD ratio of a sectional width SW to an outer diameter OD (mm) of the tire is 0.26 or less if the tire has the sectional width SW of less than 165 (mm), whereas
the sectional width SW and the outer diameter OD (mm) of the tire satisfy a relation of 2.135 × SW + 282.3 ≤ OD if the tire has the sectional width SW of 165 (mm) or more,
a dynamic storage modulus E' at 30 °C of the tread rubber is 6.0 MPa to 12.0 MPa, and a loss tangent tanδ at 60 °C of the tread rubber is 0.05 to 0.15,
a dynamic storage modulus E' at 30 °C of the buttress rubber is 1/2 or less of a dynamic storage modulus E' of the tread rubber, and a loss tangent tanδ at 60 °C of the buttress rubber is 0.1 or less;
the tread rubber is disposed in the tread portion located between a pair of virtual lines Le each extending in the tire radial direction and through the tread ground contact end E; and
the buttress rubber is disposed in the buttress portion located between the virtual line Le extending in the tire radial direction and passing through the tread ground contact end E, and a virtual line Lh extending in the tire widthwise direction and passing through a tire surface position which is distanced by a half of a peripheral length measured from the tread ground contact end E to another tire surface position which corresponds to the sectional width SW of the tire.

2. The passenger-vehicle pneumatic radial tire according to claim 1, wherein the dynamic storage modulus E' at 30 °C of the tread rubber is 7.9 MPa to 11.0 MPa, and the dynamic storage modulus E' at 30 °C of the buttress rubber is 3 MPa or less.

## Patentansprüche

1. Radialluftreifen (1) für ein Passagierfahrzeug, umfassend:
eine Karkasse (3), welche aus einer oder mehreren Karkassenlagen von radial angeordneten Korden besteht, welche sich zwischen einem Paar von Wulstabschnitten (2) erstrecken;
ein Laufflächengummi (41), welches auf einer Reifenradialaußenseite der Karkasse angeordnet ist, wobei das Laufflächengummi eine Lauffläche bildet; und
ein Stützgummi (51), welches auf einer Reifenbreitenaußenseite des Laufflächengummis angeordnet ist, wobei das Stützgummi einen Stützabschnitt bildet, **dadurch gekennzeichnet, dass**:
wenn der Reifen auf einer Felge montiert und mit einem Innendruck von 250 kPa oder mehr gefüllt ist,
das SW/OD Verhältnis zwischen einer Querschnittsbreite SW und einem Außendurchmesser OD (mm) des Reifens 0,26 oder weniger beträgt, falls der Reifen eine Querschnittsbreite SW von weniger als 165 (mm) aufweist, während
die Querschnittsbreite SW und der Außendurchmesser OD (mm) des Reifens eine Beziehung von 2,135 x SW + 282,3 ≤ OD erfüllen, falls der Reifen eine Querschnittsbreite SW von 165 (mm) oder mehr aufweist,
ein dynamischer Lagerungsmodul E' bei 30°C des Laufflächengummis 6,0 MPa bis 12,0 MPa beträgt und eine Verlusttangente tanδ bei 60°C des Laufflächengummis 0,05 bis 0,15 beträgt,
ein dynamischer Lagerungsmodul E' bei 30°C des Stützgummis 1/2 oder weniger eines dynamischen Lagerungsmoduls E' des Laufflächengummis ist, und eine Verlusttangente tanδ bei 60°C des Stützgummis 0,1 oder weniger beträgt;
wobei das Laufflächengummi in dem Laufflächenabschnitt zwischen einem Paar von virtuellen Linien Le angeordnet ist, welche sich in der Reifenradialrichtung und durch das Laufflächenbodenkontaktende E erstrecken; und
das Stützgummi im Stützabschnitt angeordnet ist, welcher zwischen der virtuellen Linie Le, welche sich in der Reifenradialrichtung erstreckt und durch das Laufflächenbodenkontaktende E geht, und einer virtuellen Linie Lh angeordnet ist, welche sich in der Reifenbreitenrichtung erstreckt und durch eine Reifenoberflächenposition geht, welche um die Hälfte einer Umfangslänge, gemessen von dem Laufflächenbodenkontaktende E zu einer anderen Reifenoberflächenposition, beabstandet ist, welche der Querschnittsbreite SW des Reifens entspricht.

2. Radialluftreifen für ein Passagierfahrzeug nach Anspruch 1,
wobei der dynamische Lagerungsmodul E' bei 30°C des Laufflächengummis 7,9 MPa bis 11,0 MPa beträgt und der dynamische Lagerungsmodul E' bei 30°C des Stützgummis 3 MPa oder weniger beträgt.

## Revendications

1. Bandage pneumatique radial pour véhicule de tourisme (1), comprenant
une carcasse (3) constituée par une ou plusieurs nappes de carcasse comprenant des câblés à agencement radial s'étendant toroïdalement entre une paire de parties de talon (2) ;
une gomme de bande de roulement (41) disposée sur un côté externe, dans la direction radiale du bandage pneumatique, de la carcasse, la gomme de bande de roulement formant une surface de bande de roulement ; et
une gomme de contrefort (51) positionnée sur un côté externe, dans le sens de la largeur du bandage pneumatique, de la gomme de bande de roulement, la gomme de contrefort formant une partie de contrefort, **caractérisé en ce que** :
lorsque le bandage pneumatique est assemblé sur une jante et rempli à une pression interne de 250 kPa ou plus ;
un rapport SW/OD entre une largeur de section SW et un diamètre extérieur OD (mm) du bandage pneumatique correspond à 0,26 ou moins lorsque le bandage pneumatique a une largeur de section SW de moins de 165 (mm) ; tandis que
la largeur de section SW et le diamètre extérieur OD (mm) du bandage pneumatique satisfont une relation de 2,135 x SW + 282,3 ≤ OD lorsque le bandage pneumatique a une largeur de section SW de 165 (mm) ou plus ;
un module de conservation dynamique E' à 30°C de la gomme de bande de roulement est compris entre 6,0 MPa et 12,0 MPa, et une tangente de l'angle de perte tanδ à 60°C de la gomme de bande de roulement est comprise entre 0,05 et 0,15 ;
un module de conservation dynamique E' à 30°C de la gomme de contrefort représente ½ ou moins du module de conservation dynamique E' de la gomme de bande de roulement, et une tangente de l'angle de pertes tanδ à 60°C de la gomme de contrefort correspond à 0,1 ou moins ;
la gomme de bande de roulement est disposée dans la partie de bande de roulement agencée entre une paire de lignes virtuelles Le s'étendant chacune dans la direction radiale du bandage pneumatique et à travers l'extrémité de contact au sol E ; et
la gomme de contrefort est disposée dans la partie de contrefort agencée entre la ligne virtuelle Le s'étendant dans la direction radiale du bandage pneumatique et passant à travers l'extrémité de contact au sol E, et une ligne virtuelle Lh s'étendant dans le sens de la largeur du bandage pneumatique et passant à travers une position de la surface du bandage pneumatique située à une distance représentant une moitié d'une longueur périphérique, mesurée de l'extrémité de contact au sol E vers une autre position de la surface du bandage pneumatique correspondant à la largeur de section SW du bandage pneumatique.

2. Bandage pneumatique radial pour véhicule de tourisme selon la revendication 1, dans lequel le module de conservation dynamique E' à 30°C de la gomme de bande de roulement est compris entre 7,9 MPa et 11,0 MPa, le module de conservation dynamique E' à 30° C de la gomme de contrefort correspondant à 3 MPa ou moins.
